(19) Europäisches Patentamt
European Patent Office
Office européen des brevets

(11) **EP 2 105 589 B1**

(12) **EUROPEAN PATENT SPECIFICATION**

(45) Date of publication and mention
of the grant of the patent:
**10.11.2010 Bulletin 2010/45**

(51) Int Cl.:
***F01N 3/022*** (2006.01)  ***C04B 38/00*** (2006.01)
***B01J 35/04*** (2006.01)

(21) Application number: **08015200.2**

(22) Date of filing: **28.08.2008**

(54) **Honeycomb structure**

Wabenstruktur

Structure en nid d'abeille

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.03.2008 PCT/JP2008/055973**

(43) Date of publication of application:
**30.09.2009 Bulletin 2009/40**

(73) Proprietor: **Ibiden Co., Ltd.
Ogaki-shi, Gifu 503-8604 (JP)**

(72) Inventors:
• **Ohno, Kazushige**
  **Gifu 501-0695 (JP)**
• **Kunieda, Masafumi**
  **Gifu 501-0695 (JP)**
• **Koga, Yoshihiro**
  **Gifu 501-0695 (JP)**

(74) Representative: **HOFFMANN EITLE
Patent- und Rechtsanwälte
Arabellastrasse 4
81925 München (DE)**

(56) References cited:
**EP-A- 1 142 619**    **EP-A- 1 961 933**
**JP-A- 2006 183 477**    **US-A- 5 116 586**

• **K. KRISHNA, G. B. F. SEIJGER, C. M. VAN DEN
BLEEK AND H. P. A. CALIS:** "Very active CeO2-
zeolite catalysts for NOx reduction with NH3"
CHEM. COMMUN. - ROYAL SOCIETY OF
CHEMISTRY, vol. 2002, 13 August 2002
(2002-08-13), pages 2030-2031, XP002502142
• **NAKATSUJI ET AL:** "A NOx reduction system
using ammonia-storage selective catalytic
reduction in rich/lean excursions" APPLIED
CATALYSIS B: ENVIRONMENTAL, ELSEVIER,
vol. 77, no. 1-2, 15 November 2007 (2007-11-15),
pages 190-201, XP022345987 ISSN: 0926-3373

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a honeycomb structure.

2. Description of the Related Art

Conventionally, a honeycomb structure has been used in an exhaust gas treatment apparatus for converting, for example, NOx in exhaust gas from a vehicle (see, for example, Japanese Patent Application Publication No.2006-183477).

The honeycomb structure has, for example, plural cells (through holes) extending from one end surface to the other end face along the longitudinal direction of the honeycomb structure. These cells are separated from each other by interposing cell walls.

The cell wall of the honeycomb structure includes, for example, ceramic such as cordierite, and is provided with an NOx adsorption layer and an ammonia adsorption layer. In the NOx adsorption layer, for example, ceria is used, and a catalyst such as platinum is supported on this layer. In the ammonia adsorption layer, for example, zeolite is used.

When exhaust gas from, for example, a vehicle is introduced in such a honeycomb structure, the NOx in the exhaust gas is adsorbed in the NOx adsorption layer in an oxidant atmosphere (for example, in a normal operation of a diesel engine), and then, in a reducing atmosphere (for example, in spiking of the diesel engine), the adsorbed NOx on the catalyst is reduced into ammonia, which is adsorbed in the ammonia adsorption layer. When the exhaust gas is in the oxidant atmosphere again, NOx is reduced by the ammonia. When the adsorbed ammonia is used up, NOx is adsorbed in the NOx adsorption layer. The NOx is converted due to this cycle.

Therefore, it is possible to convert NOx in exhaust gas when exhaust gas is introduced in the honeycomb structure.

In a conventional honeycomb structure, as described above, cordierite has been used as the base (skeleton) material, and the NOx adsorption layer and the ammonia adsorption layer are formed on a surface of the cell walls including the cordierite.

However, the cordierite itself as the base (skeleton) material for the conventional honeycomb structure does not react in the reaction of converting NOx. In other words, all the converting reaction is carried out by the two layers: the NOx adsorption layer and the ammonia adsorption layer. Therefore, to increase the efficiency of converting NOx in the honeycomb structure, it is necessary to support a sufficient amount of the NOx adsorption layer and the ammonia adsorption layer formed on the cell walls. To this end, it is necessary to increase the thicknesses of the two layers or to elongate the whole length of the cordierite. Otherwise, it is necessary to increase the frequency of a rich-spiking operation.

However, when the thicknesses of the layers are increased, the size of the openings of the cell walls becomes smaller. As a result, when exhaust gas is introduced, a pressure loss is disadvantageously increased. Further, when the total length of the cordierite is extended, there arises a problem of installation space and the weight. Further, when the frequency of the rich-spiking operation is increased, the fuel consumption is disadvantageously increased.

US 5116586 discloses the preparation of a full catalyst honeycomb structure consisting of honeycomb bodies with parallel conduits having a quadratic cross section. The honeycomb structure is extruded with a mixture of H-mordenite, i.e. zeolite, in which copper is ion exchange, cerium oxide, titanium dioxide, alkali free clay, glass fibers, aqueous ammonia solution, lactic acid, wood pulp, polyethylene oxide and carboxymethyl cellulose.

SUMMARY OF THE INVENTION

The present invention is made in light of the above circumstances and may provide a honeycomb structure having an excellent NOx conversion performance without increasing the thicknesses of the NOx adsorption layer and the ammonia adsorption layer on the cell walls and extending the total length of the cell walls. This is achieved by providing a honeycomb structure according to claim 1. Preferred embodiments are set forth in the dependent claims.

K. Krishna and Al.: "Very active CeO2-zeolite catalysts for NOx reduction with NH3", Chem. Commun., 2002, 2030-2031 discloses $CeO_2$-zeolite catalysts comprising 75 wt.% $CeO_2$ and 25 wt.% H-zeolite, in order to improve NOx conversion.

EP 1142619 discloses a ceramic filter assembly having improved exhaust gas processing efficiency. The ceramic filter assembly is produced by adhering with a ceramic seal layer outer surfaces of a plurality of filters, each of which is formed from a sintered porous ceramic body. Filter assembly as a seal layer having a thickness of 0.3 mm to 3 mm and a thermal conductance of 0.1 W/mk to 10 W/mk.

Further, the weight ratio of the second material to the third material may be in the range of from 10:1 to 20:1.

Further, the third material may be the same as the second material.

Further, the second material may be zeolite in which any one of Fe, Cu, Ni, Zn, Mn, and Co is ion-exchanged.

Further, the inorganic binder may include any one selected from a group consisting of alumina sol, silica sol, titania sol, water glass, sepiolite, and attapulgite.

Further, the honeycomb structure may further include inorganic fibers.

Further, the inorganic fibers may be any one selected from a group consisting of alumina, silica, silicon carbide, silica-alumina, glass, potassium titanate, and aluminum borate.

Further, a noble metal catalyst may be supported on the inorganic particles.

Further, plural honeycomb units each having a pillar shape and adhesive layers for joining the honeycomb units with each other may be included in the honeycomb structure.

According to an embodiment of the present invention, there is provided a honeycomb structure having an excellent NOx conversion performance without increasing the thickness of the NOx adsorption layer and the ammonia adsorption layer on the cell walls and extending the total length of the cell walls.

BRIEF DESCRIPTION OF THE DRAWINGS

Other objects, features, and advantages of the present invention will become more apparent from the following description when read in conjunction with the accompanying drawings, in which:

FIG. 1 is a schematic perspective view showing an example of a honeycomb structure according to an embodiment of the present invention;

FIG. 2 is a schematic perspective view showing an example of a honeycomb unit included in the honeycomb structure in FIG. 1;

FIG. 3 a schematic perspective view showing another example of a honeycomb structure according to an embodiment of the present invention;

FIG. 4 is a schematic view showing a cross-sectional structure of the cell wall of a conventional honeycomb structure; and

FIG. 5 is a schematic view showing a cross-sectional structure of the cell wall of a honeycomb structure according to an embodiment of the present invention.

DETAILED DESCRIPTION OF THE PREFERRED EMBODIMENTS

Next, an exemplary embodiment of the present invention is described with reference to the accompanying drawings.

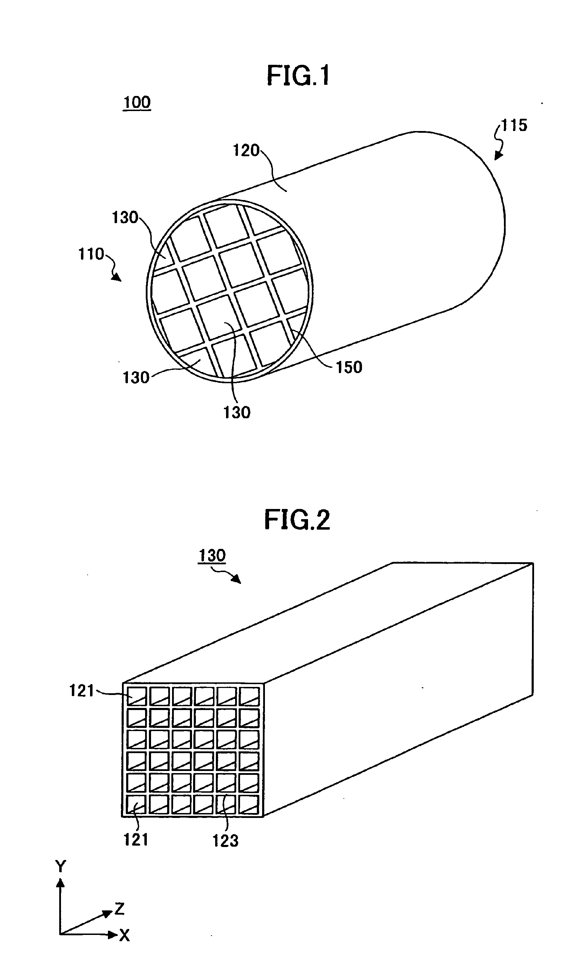

FIG. 1 schematically shows a honeycomb structure according to an embodiment of the present invention. FIG. 2 schematically shows an example of a honeycomb unit which is a basic configuration unit of the honeycomb structure in FIG. 1.

As shown in FIG. 1, the honeycomb structure 100 according to an embodiment of the present invention has two opening faces 110 and 115. A coating layer 120 is formed on an outer peripheral surface but is not formed on the two opening faces of the honeycomb structure 100.

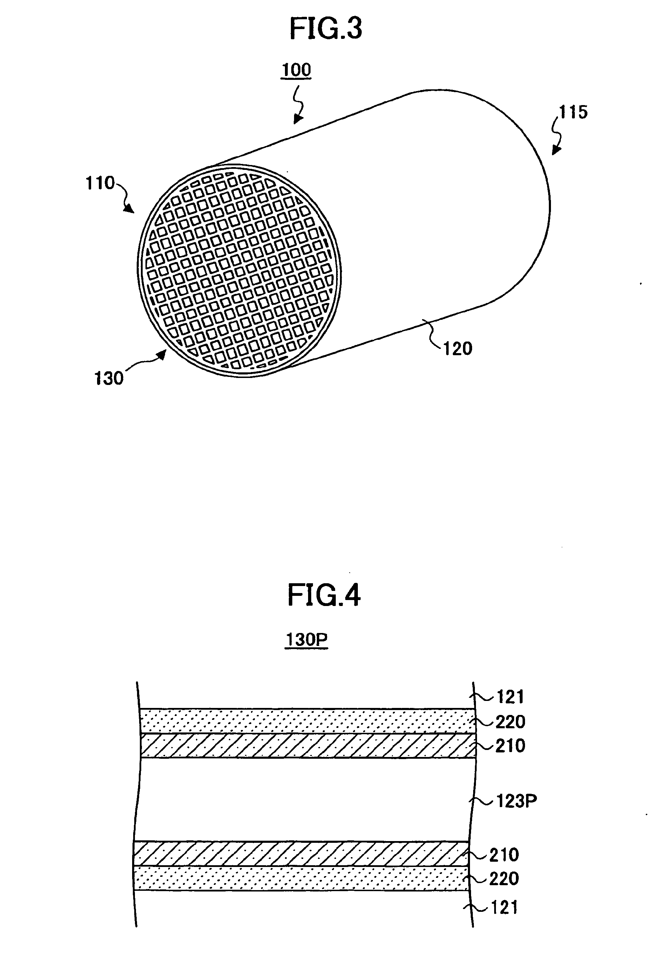

The honeycomb structure 100 may be formed in a manner so that plural honeycomb units 130 each having a pillar shape as shown in FIG. 2 are joined with each other (in FIG. 1, 4 by 4 matrix (16 units)) by interposing adhesive layers 150, dried and solidified, and cut around the outer peripheral according to a prescribed shape (in the example of FIG. 1, a cylindrical shape).

As shown in FIG. 2, the honeycomb unit 130 has plural cells (through holes) 121 and cell walls 123 dividing the cells, each cell extending in the longitudinal direction of the honeycomb unit 130 from one end face to the other end face and having openings one on each end face.

To be able to understand more clearly about a characteristic effect of the honeycomb structure 100 according to an embodiment of the present invention, an exemplary configuration of a conventional honeycomb structure is first described.

FIG. 4 schematically shows an enlarged cross section of the cell wall in a conventional honeycomb structure.

In a conventional honeycomb structure, a cell wall 123P of a honeycomb unit 130P includes cordierite. Further, an NOx adsorption layer 210 and an ammonia adsorption layer 220 are formed on the cell wall 123P of the honeycomb unit 130P. The NOx adsorption layer 210 includes ceria and a noble metal catalyst such as platinum. The ammonia adsorption layer 220 is formed outside of the NOx adsorption layer 210 and typically includes material such as zeolite. It is obvious for a person having ordinary skill in the art that each of the NOx adsorption layer 210 and the ammonia adsorption layer 220 is not uniformly (continuously) formed as a "layer" as shown in FIG. 4. Therefore, it should be noted that FIG. 4 is a symbolic view for illustrative purposes only.

When a conventional honeycomb structure including such a material group is placed in a flow of exhaust gas so that the exhaust gas is practically introduced in the honeycomb structure, the following phenomena are observed.

First, when the exhaust gas is in an oxidant atmosphere (for example, in a normal operation of a diesel engine), the NOx in the exhaust gas is adsorbed in the NOx adsorption layer 210. Next, rich-spiking is carried out so that the exhaust gas is in a reducing atmosphere. The HC is converted by a catalyst so that the generated $H_2$ and the NOx adsorbed in the NOx adsorption layer 210 react to generate ammonia according to the following reaction in Formula (1)

$$2NO + 3H_2 \rightarrow 2NH_3 + O_2 \qquad \text{Formula (1)}$$

The ammonia generated in this reaction is adsorbed in the ammonia adsorption layer 220 adjacent to the NOx adsorption layer 210.

On the other hand, when the exhaust gas is in an oxidant atmosphere again, the NOx in the exhaust gas is reduced by the ammonia adsorbed in the ammonia adsorption layer 220 according to the following reactions in Formulas (2-1) and (2-2).

$$4NH_3 + 4NO + O_2 \rightarrow 4N_2 + 6H_2O \qquad \text{Formula (2-1)}$$

$$8NH_3 + 6NO_2 \rightarrow 7N_2 + 12H_2O \qquad \text{Formula (2-2)}$$

Further, when the ammonia adsorbed in the ammonia adsorption layer 220 is comsumed, the NOx is adsorbed in the NOx adsorption layer 210 again. By repeating a cycle like this, the NOx is reduced and the exhaust gas in which the NOx is reduced reaches the other end face of the cell 121 and then is exhausted from this end face of the honeycomb structure.

As described above, in a conventional honeycomb structure, the NOx in the exhaust gas can be converted by the function of the NOx adsorption layer 210 and the ammonia adsorption layer 220 each supported on the cell walls 123P of the honeycomb structure.

However, it is necessary to note that the cordierite itself included in the cell walls 123P does not react in the NOx conversion reaction. In other words, it is necessary to carry out all the reactions for converting the NOx in the exhaust gas only by the two layers, the NOx adsorption layer 210 and the ammonia adsorption layer 220 each supported on the cell walls 123P. Therefore, to increase the efficiency of converting NOx in the honeycomb structure, it is necessary to support sufficient amounts of the NOx adsorption layer 210 and the ammonia adsorption layer 220 on the cell walls 123P. To this end, it is necessary to increase the thicknesses of the two layers 210 and 220 or to elongate the whole length of the cordierite which is a supporting body. Otherwise, it is necessary to increase the frequency of a rich-spiking operation.

However, when the thickness of each layer is increased, the size of the opening of the cell walls becomes smaller. As a result, when exhaust gas is introduced, a pressure loss is disadvantageously increased. Further, when the total length of the cordierite (cell walls) is extended, there may arise a problem of the installation space and the weight. Further, when the frequency of the rich-spiking operation is increased, the fuel consumption is disadvantageously increased.

On the other hand, in a honeycomb structure according to an embodiment of the present invention, the cell walls include materials different from those in the conventional honeycomb structure.

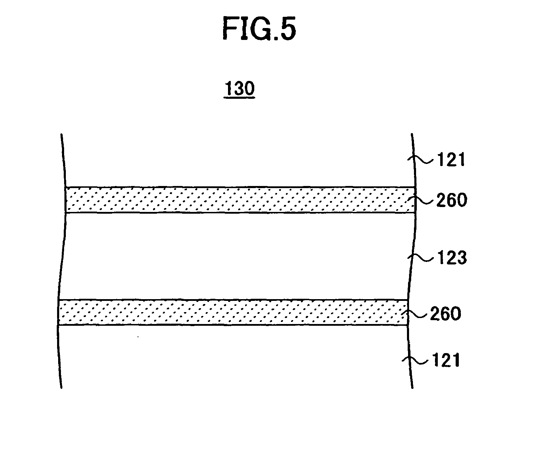

FIG. 5 shows a schematic enlarged view of a cross section of the cell wall of the honeycomb structure according to an embodiment of the present invention.

In the honeycomb structure 100 according to an embodiment of the present invention, the cell wall 123 of the honeycomb unit 130 includes a material (such as ceria) capable of adsorbing NOx and a material (such as zeolite) capable of adsorbing ammonia. For example, in the honeycomb unit 130, the cell wall 123 includes a mixture of ceria and zeolite, and a noble metal catalyst (such as platinum) is supported on the cell wall. Further, in the honeycomb structure 100 according to an embodiment of the present invention, a preliminary layer 260 is formed on the surface of the cell wall 123. The preliminary layer 260 includes, for example, zeolite. In the FIG. 5, it is illustrated that the preliminary layer 260 is uniformly formed as a "layer". However, as described with reference to FIG. 4 above, it is obvious that the preliminary layer 260 is not uniformly (continuously) formed as a "layer".

In the honeycomb structure 100 according to an embodiment of the present invention, the cell walls 123 including such materials do not include cordierite that does not contribute to the NOx conversion reaction unlike the conventional honeycomb structure. Therefore, it becomes possible to use all the materials included in the honeycomb structure 100 (namely, in the honeycomb unit 130) for the NOx conversion reaction. Therefore advantageously, it becomes possible to significantly improve the NOx conversion capability.

Further, in the honeycomb structure according to an embodiment of the present invention, since a necessary and sufficient amount of a material for adsorbing NOx and a material for adsorbing ammonia are included, it is not necessary to increase the thicknesses of the NOx adsorption layer and the ammonia adsorption layer on the cell walls 123P, to extend the total length of the honeycomb structure, or to increase the frequency of the rich-spiking operation. Therefore advantageously, in the honeycomb structure according to an embodiment of the present invention, it becomes possible to reduce the weight, the size, and the fuel consumption.

It should be noted that the preliminary layer 260 formed on the surface of the cell walls 123 adsorbs ammonia like a conventional ammonia adsorption layer 220. The preliminary layer 260 is just a member preliminarily provided for ensuring that ammonia is not exhausted outside the honeycomb structure. Namely, according to an embodiment of the present invention, the cell walls 123 of the honeycomb structure already includes a material contributing to the adsorption of ammonia, so that most of ammonia generated in the above-mentioned NOx conversion process is adsorbed in the ammonia adsorption material in a skeleton structure part of the cell walls 123. If any of the ammonia should not be adsorbed in the skeleton structure part of the cell walls 123, the preliminary layer 260 adsorbs the small amount of ammonia that has not be adsorbed in the cell walls 123, so as to ensure that the ammonia generated in a reaction process is not exhausted outside of the honeycomb structure. Therefore, in the honeycomb structure 100 according to an embodiment of the present invention, the thickness of the preliminary layer 260 can be made sufficiently less than that of the conventional ammonia adsorption layer 220.

Further advantageously, the honeycomb structure according to an embodiment of the present invention can maintain stable NOx conversion performance for a period longer than a conventional honeycomb structure does due to the following reasons. The zeolite used in the ammonia adsorption layer 220 in a conventional honeycomb structure is likely to absorb water vapor in a high temperature environment, which may cause a hydrolysis reaction of ammonia.

When such a reaction occurs, the aluminum is desorption from the zeolite, thereby degrading the ammonia adsorption capability of the ammonia adsorption layer 220. As a result, generally, the NOx conversion performance is degraded over time. On the other hand, in the honeycomb structure according to an embodiment of the present invention, the zeolite in the cell walls is adjacent to the ceria on which a noble metal catalyst is supported. Because of this feature, the water vapor preferentially reacts with the noble metal catalyst on the ceria rather than with the zeolite, which makes it difficult to cause the hydrolysis reaction of ammonia. Therefore, in the honeycomb structure according to an embodiment of the present invention, it is possible to maintain stable NOx conversion performance for a longer period of time.

In the honeycomb unit 130 according to an embodiment of the present invention, it is preferable that the compounding ratio (weight ratio) of the material (such as ceria) for adsorbing the NOx in the cell walls to the material (such as zeolite) for adsorbing the ammonia is in the range of from 2:1 to 10:1. From a stoichiometric viewpoint, when the compounding ratio of the two materials is within this range, the ammonia generated with the NOx adsorption material can be effectively adsorbed by the ammonia adsorption material.

Further preferably, the amount of the preliminary layer 260 coated on the cell walls 123 is in the range of 5 g/L to 15 g/L.

The honeycomb unit 130 according to an embodiment of the present invention includes inorganic binder in addition to the ceria particles and the zeolite particles. The honeycomb unit 130 according to an embodiment of the present invention may further include inorganic fibers.

As the material of the inorganic binder, inorganic sol and a clay binder and the like may be used. The specific examples of the inorganic sol is alumina sol, silica sol, titania sol, water glass and the like. The specific examples of the clay binders is double chain structural type clay such as white clay, kaolin, montmorillonite, sepiolite, attapulgite and the like. Any of these may be used alone or in combination of two or more kinds.

Among these materials, it is preferable to use at least one selected from a group consisting of alumina sol, silica sol, titania sol, water glass, sepiolite and attapulgite.

Further, when inorganic fibers are further included in the honeycomb unit, preferably, a material of the inorganic fibers is alumina, silica, silicon carbide, silica-alumina, glass, potassium titanate, aluminum borate and the like. Any of these may be used alone or in combination of two or more. Among the above materials, more preferably, aluminum borate is used. The inorganic fibers include whiskers.

The lower limit of a total amount of ceria particles and zeolite particles in the honeycomb unit is preferably 30 wt%, more preferably 40 wt%, and still more preferably 50 wt%. On the other hand, the upper limit of the total amount of ceria particles and zeolite particles in the honeycomb unit is preferably 90 wt% and more preferably 80 wt%. When the total amount of these particles is less than 30 wt%, the amount of the particles contributing to the NOx conversion is relatively reduced. Therefore, the NOx conversion performance may be degraded. On the other hand, when the total amount of these particles exceeds 90 wt%, the strength of the honeycomb unit may be reduced.

The inorganic binder content as solids content is preferably equal to or more than 5 wt%, more preferably equal to or more than 10 wt%, and still more preferably equal to or more than 15 wt%. On the other hand, the inorganic binder content as solids content is preferably equal to or less than 50 wt%, more preferably equal to or less than 40 wt%, and still more preferably equal to or less than 35 wt%. When the inorganic binder content as solids content is less than 5 wt%, the strength of the manufactured honeycomb unit may be reduced. On the other hand, when the inorganic binder content as solids content exceeds 50 wt%, the molding capability of the raw material composition may be degraded.

When the honeycomb unit includes inorganic fibers, the lower limit of the total amount of the inorganic fibers is preferably 3 wt%, more preferably 5 wt%, and still more preferably 8 wt%. On the other hand, the upper limit of the total amount of the inorganic fibers is preferably 50 wt%, more preferably 40 wt%, and still more preferably 30 wt%. When the inorganic fibers content is less than 3 wt%, the effect of improving the strength of the honeycomb unit is small. When the inorganic fibers content exceeds 50 wt%, the amount of ceria particles and zeolite particles each contributing to the NOx conversion is relatively reduced. As a result, the NOx conversion performance may be degraded.

The shape of the cross section perpendicular to the longitudinal direction of the honeycomb unit 130 is not specifically limited, but any shape may be used as long as the shape allows the honeycomb units to join with each other by interposing adhesive layers. The honeycomb unit 130 may have any shape including a square, a rectangle, a hexagon, a fan shape and the like.

Further, the shape of the cross section perpendicular to the longitudinal direction of the cell 121 of the honeycomb unit 130 is not specifically limited, but may be a triangle, a polygonal shape and the like in addition to a square.

The cell density of the honeycomb unit 130 is preferably in the range of 15.5 units/cm$^2$ to 186 units/cm$^2$ (100 cpsi to 1200 cpsi), more preferably in the range of 46.5 units/cm$^2$ to 170 units/cm$^2$ (300 cpsi to 1100 cpsi), and still more preferably in the range of 62.0 units/cm$^2$ to 155 units/cm$^2$ (400 cpsi to 1000 cpsi).

The thickness of the cell wall 123 of the honeycomb unit 130 (before a noble metal catalyst is supported) is not specifically limited, but the lower limit and the upper limit of the thickness of the cell wall 123 of the honeycomb unit 130 is preferably 0.1 mm and 0.4 mm, respectively.

On the other hand, the honeycomb structure 100 may have any shape including a cylindroid shape, a square pillar shape, a hexagonal pillar shape and the like in addition to a pillar shape as shown in FIG. 1.

The coating layer 120 of the honeycomb structure 100 is formed of a paste (coating layer paste) including inorganic particles, inorganic fibers, inorganic binder, and organic binder as the raw material. As the inorganic particles, the particles of alumina, silica, zirconia, titania, ceria, mullite, zeolite, or the like are used. Any of these may be used alone or in combination of two or more kinds. As the inorganic fibers and the inorganic binder, the above-mentioned material may be used. Further, as the organic binder, polyvinyl alcohol, methylcellulose, ethylcellulose, carboxymethylcellulose, or the like may be used. Any of these may be used alone or in combination by combining two or more kinds. As the organic binder, more preferably, carboxymethylcellulose is used.

Then, the coating layer paste is applied on an outer peripheral surface of the honeycomb structure, and is dried and solidified to form the coating layer. When necessary, a pore-forming agent such as balloons which is a micro sized hollow sphere having oxide-based ceramic as a component, spherical acrylic particles, graphite or the like may be added to the paste as the raw material. The thickness of the coating layer is preferably in the range of 0.1 mm to 0.2 mm.

Further, in the honeycomb structure 100 according to an embodiment of the present invention, the same materials are used in both the adhesive layer 150 and the coating layer 120. However, the materials used in the adhesive layer 150 may be different from those in the coating layer 120, and the compounding ratio of the materials in the in the adhesive layer 150 may be different from that in the coating layer 120.

Such a honeycomb structure 100 may be used in a treatment apparatus for exhaust gas exhausted from a diesel engine and the like.

(Manufacturing method of honeycomb structure)

Next, a method of manufacturing the honeycomb structure according to an embodiment of the present invention is described.

First, a honeycomb unit molded body is manufactured by extrusion molding and the like using a raw material paste including inorganic particles (ceria particles and zeolite particles) and inorganic binder as a main component and inorganic fibers added when necessary.

As the raw material paste, organic binder, dispersion medium, and molding aid may be adequately added to the above materials in accordance with desired moldability. The kind of the organic binder is not specifically limited, but may be one or a combination of methylcellulose, carboxymethylcellulose, hydroxyethelcellulose, polyethyleneglycol, phenol resin, epoxy resin, and the like. The compounding amount of the organic binder is preferably in the range 1 part by weight to 10 parts by weight with respect to the total 100 parts by weight of the inorganic particles, inorganic binder, and inorganic fibers.

The dispersion medium is not specifically limited, but may be water, organic solvent (such as benzene), alcohol (such as methanol), and the like. The molding aid is not specifically limited, but may be ethylene glycol, dextrin, fatty acid, fatty acid soap, polyalcohol, and the like.

It is preferable that the raw material paste be mixed and kneaded. An apparatus such as a mixer or an attritor may be used for the mixing, and an apparatus such as a kneader may be used for the kneading. A method of forming the raw material paste is not specifically limited, but it is preferable to form a shape including the cell by, for example, extrusion molding.

Next, preferably, the thus-obtained molded body is dried. A drying apparatus is not specifically limited, but is used a microwave drying apparatus, a hot air drying apparatus, a dielectric drying apparatus, reduced pressure drying apparatus, vacuum drying apparatus, a freeze drying apparatus and the like. Further preferably, the obtained molded body is degreased. The degreasing condition is not specifically limited and is to be selected in accordance with a kind or amount of organic substance included in the molded body, but is preferably heated at a temperature of 400 °C for two hours. Next, the obtained molded body is fired. The firing condition is not specifically limited but is preferably in the range of 600 °C to 1200 °C, and more preferably in the range of 600 °C to 1000 °C. This is because when the firing temperature is less than 600 °C, the progress of sintering may be difficult, thereby reducing the strength of the honeycomb unit. On the other hand, when the firing temperature exceeds 1200 °C, excessive progress of sintering may occur, thereby reducing the specific surface area per unit volume of the honeycomb unit.

Next, a noble metal catalyst is supported on the cell walls of the obtained honeycomb unit. The noble metal catalyst is not specifically limited, but may be platinum, palladium, rhodium, and the like. The noble metal catalyst is supported on the cell walls by, for example, impregnating the honeycomb unit with nitric acid solution including platinum ions.

By supporting the noble metal catalyst on the cell walls of the obtained honeycomb unit, the noble metal catalyst is supported on the inorganic particles in the honeycomb unit. It should be noted that the noble metal catalyst is supported on the inorganic binder component as well in the honeycomb unit.

Next, the preliminary layer is coated on the cell walls of the honeycomb unit. The preliminary layer includes zeolite. The preliminary layer is formed by being coated on each cell wall.

Next, an adhesive layer paste which becomes an adhesive layer later is uniformly applied on a side surface of the honeycomb unit obtained by the above process. Then, the other honeycomb units are sequentially joined with each other by interposing the adhesive layer paste. This process is repeated to manufacture a honeycomb structure having a desired size (for example, 4 by 4 matrix of honeycomb units).

The adhesive layer paste is not specifically limited, but may be a mixture of inorganic binder and inorganic particles, a mixture of inorganic binder and inorganic fibers, a mixture of inorganic binder, inorganic particles, and inorganic fibers, or the like. Further, the adhesive layers paste may include organic binder. The organic binder is not specifically limited, but may be polyvinyl alcohol, methylcellulose, ethylcellulose, carboxymethylcellulose, and the like or a combination thereof.

The thickness of the adhesive layer for joining the honeycomb units with each other is preferably in the range of 0.3 mm to 2 mm. When the thickness of the adhesive layers is less than 0.3 mm, sufficient bonding strength may not be obtained. On the other hand, when the thickness of the adhesive layers exceeds 2 mm, the pressure loss may be increased. It should be noted that the number of honeycomb units is appropriately selected in accordance with the size of the honeycomb structure.

Next, the honeycomb structure is heated so that the adhesive layer paste is dried and solidified to form the adhesive layer and join the honeycomb units with each other.

Then, the honeycomb structure is cut into, for example, a cylindrical shape by using a diamond cutter to manufacture a honeycomb structure having a desired outer peripheral shape.

Next, a coating layer paste is applied on the outer peripheral surface (side surface) of the honeycomb structure. Then the coating layer paste is dried and solidified to form the coating layer. The coating layer paste is not specifically limited, but may be the same as or different from the adhesive layer paste. Further, the compounding ratio of the materials in the in the coating layer paste may be the same as or different from that in the adhesive layer paste. The thickness of the coating layer is not specifically limited.

After plural honeycomb units are joined with each other by the interposing adhesive layers (or after the coating layer is formed when the coating layer is applied), it is preferable to degrease the assembly (honeycomb structure). By doing this process, when the adhesive layer paste and the coating layer paste include organic binder, the organic binder can be removed. The degreasing condition is to be selected in accordance with a kind or amount of organic substance included in the pastes, but is generally heated at a temperature of 400 °C for about two hours.

By doing the above procedure, the honeycomb structure shown in FIG. 1 is manufactured.

The honeycomb structure having plural honeycomb units as shown in FIG. 1 is described above. The present invention is not limited to the honeycomb structure as shown in FIG. 1. For example, a honeycomb structure may have a single honeycomb unit as shown in FIG. 3. In this case, the coating layer may be or may not be formed.

EXAMPLE

Next, examples according to the present invention are described.

(EXAMPLE 1)

First, 2000 parts by weight of ceria particles (average particle diameter: 2 $\mu$m), 750 parts by weight of zeolite particles (average particle diameter: 2 $\mu$m), 345 parts by weight of alumina fibers (average fiber diameter: 6 $\mu$m; average fiber length: 100 $\mu$m), and 2200 parts by weight of alumina sol (solid concentration: 20 wt%) are mixed to obtain a mixture. 320 parts by weight of methylcellulose as organic binder, a small amount of a plasticizing agent, a surface-activating agent, and a lubricant agent are added to the mixture and are mixed and kneaded to obtain a mixed composition. Then, the mixed composition is extrusion molded by using an extrusion molding apparatus to obtain a raw molded body.

Next, the raw molded body is fully dried by using a microwave drying apparatus and a hot air drying apparatus, then degreased at a temperature of 400 °C for two hours, and then fired at a temperature of 700 °C for two hours to obtain a porous honeycomb unit having a square pillar shape(sizes: 35 mm (breadth) x 35 mm (width) x 150mm (length)). The cell density of the porous honeycomb unit is 93 units/cm$^2$. and thickness of the partition walls is 0.2 mm.

Next, the porous honeycomb unit having a square pillar shape is cut along the axis directions by using a diamond cutter to obtain an evaluation sample of a porous honeycomb unit having a cylindrical shape (sizes: 25 mm (diameter) x 60 mm (length)).

Next, the thus-obtained porous honeycomb unit (evaluation sample) having a cylindrical shape is impregnated with platinum nitrate solution, and then is heated at a temperature of 600 °C for one hour to support platinum on the cell walls. The platinum weight per unit volume in the honeycomb unit having a cylindrical shape is 3 g/L.

Next, the thus-obtained honeycomb unit having a cylindrical shape is wash-coated with zeolite slurry, and then is heated at a temperature of 600 °C for one hour. By doing this process, the preliminary layer including zeolite is coated on the cell walls. The coating weight of zeolite per unit volume is 5.0 g/L.

(EXAMPLE 2)

Next, by doing the same method as in Example 1, a honeycomb unit of Example 2 (evaluation sample) is manufactured. However, in this Example 2, the coating weight of zeolite in the preliminary layer is 10.0 g/L.

(EXAMPLE 3)

Next, by doing the same method as in Example 1, a honeycomb unit of Example 3 (evaluation sample) is manufactured. However, in this Example 3, the coating weight of zeolite in the preliminary layer is 15.0 g/L.

(EXAMPLE 4)

Next, by doing the same method as in Example 1, a honeycomb unit of Example 4 (evaluation sample) is manufactured. However, in this Example 4, 2250 parts by weight of ceria particles (average particle diameter: 2 $\mu$m), 500 parts by weight of zeolite particles (average particle diameter: 2 $\mu$m) are used. The other conditions are the same as in Example 1.

(EXAMPLE 5)

Next, by doing the same method as in Example 4, a honeycomb unit of Example 5 (evaluation sample) is manufactured. However, in this Example 5, the coating weight of zeolite in the preliminary layer is 10.0 g/L.

(EXAMPLE 6)

Next, by doing the same method as in Example 4, a honeycomb unit of Example 6 (evaluation sample) is manufactured. However, in this Example 6, the coating weight of zeolite in the preliminary layer is 15.0 g/L.

(COMPARATIVE EXAMPLE 1)

Next, by doing the same method as in Example 1, a honeycomb unit of Comparative example 1 (evaluation sample) is manufactured. However, in this Comparative example 1, 2700 parts by weight of ceria particles (average particle diameter: 2 $\mu$m) are used but no zeolite particles are added. Further, a zeolite preliminary layer is not coated on the surface of the cell walls.

(COMPARATIVE EXAMPLE 2)

Next, by doing the same method as in Example 1, a honeycomb unit of Comparative example 2 (evaluation sample) is manufactured. However, in this Comparative example 2, 2200 parts by weight of ceria particles (average particle diameter: 2 $\mu$m) and 500 parts by weight of zeolite particles (average particle diameter: 2 $\mu$m) are used to form the honeycomb unit. Further, a zeolite preliminary layer is not coated on the surface of the cell walls.

Table 1 collectively shows the data of the compounding amount (parts by weight) of the materials (ceria and zeolite) and the coating amount of the zeolite preliminary layer of the honeycomb units with respect to each of the Examples and Comparative examples.

[Table 1]

| | COMPOUNDING AMOUNT (PARTS BY WEIGHT) | | COATING AMOUNT OF PRELIMINARY LAYER (g/L) | NOx CONVERSION RATE (%) | | | AMMONIA DETECTION |
|---|---|---|---|---|---|---|---|
| | CERIA | ZEOLITE | | 200°C | 300°C | 400°C | |
| EXAMPLE 1 | 2000 | 750 | 5.0 | 97 | 94 | 85 | NO |
| EXAMPLE 2 | 2000 | 750 | 10.0 | 97 | 95 | 85 | NO |
| EXAMPLE 3 | 2000 | 750 | 15.0 | 97 | 94 | 85 | NO |
| EXAMPLE 4 | 2250 | 500 | 5.0 | 93 | 87 | 82 | NO |
| EXAMPLE 5 | 2250 | 500 | 10.0 | 93 | 88 | 82 | NO |
| EXAMPLE 6 | 2250 | 500 | 15.0 | 93 | 88 | 82 | NO |
| COMPARATIVE EXAMPLE 1 | 2700 | -- | -- | 90 | 87 | 76 | YES |
| COMPARATIVE EXAMPLE 2 | 2200 | 500 | -- | 93 | 88 | 82 | YES |

(Evaluation of NOx conversion performance)

The NOx conversion performance with respect to Examples 1 through 6 and Comparative examples 1 and 2 is evaluated by using the corresponding evaluation samples prepared by the above-mentioned methods. In the evaluation of the NOx conversion performance, the mixed gas simulating the lean operating condition and the mixed gas simulating the rich-spiking operating condition are introduced in each honeycomb unit so as to carry out the NOx conversion. Then, the NO (nitric oxide) amount in the gas exhausted from each honeycomb structure is measured.

Table 2 shows the composition of the two kinds of the mixed gas simulating the lean and rich-spiking operations, respectively. In this evaluation, first, the lean gas is introduced in the honeycomb structure for 55 seconds and then the rich gas introduced for 5 second. This cycle is repeated until the NO concentration in the exhaust gas becomes almost stable.

[Table 2]

| GAS COMPOSITION | GAS CONCENTRATION | |
|---|---|---|
| | IN LEAN OPERATION | IN RICH-SPIKING OPERATION |
| $CO_2$ | 6vol% | 6vol% |
| $O_2$ | 6vol% | -- |
| NO | 110ppm | 110ppm |
| CO | 500ppm | 2% |
| THC (HYDRO CARBON) | 900ppm* | 900ppm* |
| $H_2O$ | 7vol% | 7vol% |
| $N_2$ | Balance | Balance |

(continued)

| GAS COMPOSITION | GAS CONCENTRATION | |
| --- | --- | --- |
| | IN LEAN OPERATION | IN RICH-SPIKING OPERATION |
| SV | 50000/hr | 47000/hr |
| * CARBON AMOUNT CRITERION | | |

NO concentration is measured by using "MEXA-7100D" (HORIBA Ltd.) having an NO detection limit of 0.1 ppm.

The temperature (of the honeycomb units and the simulation gas) during the evaluations is maintained at a temperature of 200 °C, 300 °C, or 400 °C.

To evaluate the NOx conversion performance, the NOx conversion rate "N" given as follows is used.

$$N(\%) = \{(\text{NO concentration of mixed gas before the mixed gas is introduced in honeycomb unit}) - (\text{NO concentration of the exhaust gas exhausted from the honeycomb unit})\} / (\text{NO concentration of mixed gas before the mixed gas is introduced in honeycomb unit}) \times 100 \qquad (3)$$

Further, in addition to the evaluation of the NOx conversion performance, the ammonia amount in the gas exhausted from each of the honeycomb units is measured. To measure the ammonia amount, the ammonia detecting apparatus "MEXA-1170NX" (HORIBA Ltd.) having a measurement limit of 0.1 ppm is used.

The results of the measurement are shown in the right end columns of Table 1. The results shows that each of the honeycomb units according to an embodiment of the present invention (evaluation samples of Example 1 through 6) has a higher NOx conversion rate than the honeycomb unit (evaluation sample) of Comparative sample 1 at any of the temperatures. Further, ammonia is detected in the exhaust gas from each honeycomb unit (evaluation sample) of Comparative examples 1 and 2. However, no ammonia is detected from any of the honeycomb units (evaluation samples) of Examples 1 through 6.

As described above, the honeycomb structure according to an embodiment of the present invention improves the NOx conversion performance and shows an excellent characteristic without exhausting ammonia.

The present application is based on and claims the benefit of priority of Japanese Patent Application No. PCT/JP2008/055973, filed on March 27, 2008

## Claims

1. A honeycomb structure comprising
   a honeycomb unit having a pillar shape including
   inorganic particles and inorganic binder, and cell walls defining plural cells each extending along the longitudinal direction from one end surface to the other end surface,
   wherein
   the cell walls includes a first material including NOx adsorption material and a second material including ammonia adsorption material; and
   a third material including zeolite is coated on the cell walls.

2. The honeycomb structure according to claim 1, wherein
   the first material includes ceria, and the second and the third materials include zeolite.

3. The honeycomb structure according to claim 1 or 2, wherein
   the weight ratio of the first material to the second material is in the range of from 2:1 to 10:1.

**4.** The honeycomb structure according to any one of claims 1 through 3, wherein the weight ratio of the second material to the third material is in the range of from 10:1 to 20:1.

**5.** The honeycomb structure according to any one of claims 1 through 4, wherein the third material is substantially the same as the second material.

**6.** The honeycomb structure according to any one of claims 1 through 5, wherein the second material is the zeolite in which any one of Fe, Cu, Ni, Zn, Mn, and Co is ion-exchanged.

**7.** The honeycomb structure according to any one of claims 1 through 6, wherein the inorganic binder includes at least any one selected from a group consisting of alumina sol, silica sol, titania sol, water glass, sepiolite, and attapulgite.

**8.** The honeycomb structure according to any one of claims 1 through 7, wherein the honeycomb unit includes inorganic fibers.

**9.** The honeycomb structure according to claim 8, wherein the inorganic fibers is at least any one selected from a group consisting of alumina, silica, silicon carbide, silica-alumina, glass, potassium titanate, and aluminum borate.

**10.** The honeycomb structure according to any one of claims 1 through 9, wherein a noble metal catalyst is supported on the inorganic particles.

**11.** The honeycomb structure according to any one of claims 1 through 10, wherein the honeycomb structure has plural honeycomb units each having a pillar shape and adhesive layers for joining the honeycomb units with each other.

**Patentansprüche**

**1.** Wabenstruktur, umfassend eine Wabeneinheit in Säulenform, die anorganische Partikel und ein anorganisches Bindemittel, sowie Zellwände, die mehrere Zellen begrenzen, von denen sich jede in Längsrichtung von einem Ende der Oberfläche zum anderen Ende der Oberfläche erstreckt, einschliesst,
wobei
die Zellwände ein erstes Material einschliessen, das ein NOx-adsorbierendes Material einschliesst, sowie ein zweites Material, das ein Ammoniak-adsorbierendes Material einschliesst; und
ein drittes Material, das Zeolith einschliesst, auf die Zellwände aufgetragen ist.

**2.** Wabenstruktur nach Anspruch 1, wobei das erste Material Ceria einschliesst und das zweite und das dritte Material Zeolith einschliessen.

**3.** Wabenstruktur nach Anspruch 1 oder 2, wobei das Gewichtsverhältnis von erstem Material zu zweitem Material im Bereich von 2:1 bis 10:1 liegt.

**4.** Wabenstruktur nach einem der Ansprüche 1 bis 3, wobei das Gewichtsverhältnis von zweitem Material zu drittem Material im Bereich von 10:1 bis 20:1 liegt.

**5.** Wabenstruktur nach einem der Ansprüche 1 bis 4, wobei das dritte Material im wesentlichen das gleiche wie das zweite Material ist.

**6.** Wabenstruktur nach einem der Ansprüche 1 bis 5, wobei das zweite Material der Zeolith ist, in dem eines von Fe, Cu, Ni, Zn, Mn und Co ionenausgetauscht ist.

**7.** Wabenstruktur nach einem der Ansprüche 1 bis 6, wobei das anorganische Bindemittel mindestens eines, ausgewählt aus einer Gruppe bestehend aus Aluminiumoxidsol, Siliciumdioxidsol, Titandioxidsol, Wasserglas, Sepiolit und Attapulgit, einschliesst.

**8.** Wabenstruktur nach einem der Ansprüche 1 bis 7, wobei die Wabeneinheit anorganische Fasern einschliesst.

**9.** Wabenstruktur nach Anspruch 8, wobei die anorganische Faser mindestens eine, ausgewählt aus einer Gruppe bestehend aus Aluminiumoxid, Siliciumdioxid, Siliciumcarbid, Aluminiumsilicat, Glas, Kaliumtitanat und Aluminiumborat, ist.

**10.** Wabenstruktur nach einem der Ansprüche 1 bis 9, wobei ein Edelmetallkatalysator auf die anorganischen Partikel aufgetragen ist.

**11.** Wabenstruktur nach einem der Ansprüche 1 bis 10, wobei die Wabenstruktur mehrere Wabeneinheiten, von denen jede eine Säulenform hat, sowie Klebeschichten zum Zusammenfügen der Wabeneinheiten miteinander aufweist.

**Revendications**

**1.** Structure en nid d'abeilles, comprenant
une unité en nid d'abeilles ayant une forme de colonne incluant
des particules inorganiques et un liant inorganique, et des parois de cellules définissant plusieurs cellules s'étendant chacune le long de la direction longitudinale à partir d'une surface d'extrémité jusqu'à l'autre surface d'extrémité, dans laquelle les parois de cellules incluent un premier matériau incluant un matériau d'adsorption de $NO_x$ et un deuxième matériau incluant un matériau d'adsorption d'ammoniac ; et
un troisième matériau incluant une zéolite est appliqué sur les parois de cellules.

**2.** Structure en nid d'abeilles selon la revendication 1, dans laquelle le premier matériau inclut de l'oxyde de cérium, et les deuxième et troisième matériaux incluent de la zéolite.

**3.** Structure en nid d'abeilles selon la revendication 1 ou 2, dans laquelle le rapport pondéral du premier matériau au deuxième matériau est dans la gamme de 2:1 à 10:1.

**4.** Structure en nid d'abeilles selon l'une quelconque des revendications 1 à 3, dans laquelle le rapport pondéral du deuxième matériau au troisième matériau est dans la gamme de 10:1 à 20:1.

**5.** Structure en nid d'abeilles selon l'une quelconque des revendications 1 à 4, dans laquelle le troisième matériau est essentiellement identique au deuxième matériau.

**6.** Structure en nid d'abeilles selon l'une quelconque des revendications 1 à 5, dans laquelle le deuxième matériau est la zéolite dans laquelle l'un quelconque parmi Fe, Cu, Ni, Zn, Mn et Co est à ions échangés.

**7.** Structure en nid d'abeilles selon l'une quelconque des revendications 1 à 6, dans laquelle le liant inorganique inclut au moins l'un quelconque choisi dans un groupe constitué par un sol d'alumine, un sol de silice, un sol de dioxyde de titane, un verre soluble, la sépiolite et l'attapulgite.

**8.** Structure en nid d'abeilles selon l'une quelconque des revendications 1 à 7, dans laquelle l'unité en nid d'abeilles inclut des fibres inorganiques.

**9.** Structure en nid d'abeilles selon la revendication 8, dans laquelle les fibres inorganiques sont au moins l'une quelconque choisie dans un groupe constitué par une alumine, une silice, le carbure de silicium, une silice-alumine, un verre, le titanate de potassium et le borate d'aluminium.

**10.** Structure en nid d'abeilles selon l'une quelconque des revendications 1 à 9, dans laquelle un catalyseur à métal noble est supporté sur les particules inorganiques.

**11.** Structure en nid d'abeilles selon l'une quelconque des revendications 1 à 10, dans laquelle la structure en nid d'abeilles a plusieurs unités en nid d'abeilles ayant chacune une forme de colonne et des couches adhésives pour joindre les unités en nid d'abeilles entre elles.

# FIG.1

# FIG.2

# FIG.3

<u>100</u>

115

110

130

120

# FIG.4

<u>130P</u>

121

220

210

123P

210

220

121

# FIG.5

<u>130</u>

121

260

123

260

121

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006183477 A
- US 5116586 A
- EP 1142619 A
- JP 2008055973 W

**Non-patent literature cited in the description**

- **K. Krishna.** Very active CeO2-zeolite catalysts for NOx reduction with NH. *Chem. Commun.,* 2002, 2030-2031